Europäisches Patentamt

European Patent Office

Office européen des brevets

(19)

(11) Veröffentlichungsnummer: **0 006 150
B1**

(12) **EUROPÄISCHE PATENTSCHRIFT**

(45) Veröffentlichungstag der Patentschrift:
02.02.83

(51) Int. Cl.³: **C 08 G 18/14, C 08 G 18/72,
C 08 G 18/22**

(21) Anmeldenummer: **79101619.9**

(22) Anmeldetag: **28.05.79**

(54) **Verfahren zur Herstellung von lichtbeständigen Polyurethan-Integralschaumstoffen.**

(30) Priorität: **10.06.78 DE 2825569**

(43) Veröffentlichungstag der Anmeldung:
**09.01.80 Patentblatt 80/1**

(45) Bekanntmachung des Hinweises auf die Patenterteilung:
**02.02.83 Patentblatt 83/5**

(84) Benannte Vertragsstaaten:
**BE DE FR GB IT**

(56) Entgegenhaltungen:
**DD-A- 113 766
DE-A-1 719 325
DE-A-2 236 707
DE-A-2 545 118
DE-A-2 641 734**

**Die Akte enthält technische Angaben, die nach dem
Eingang der Anmeldung eingereicht wurden und die
nicht in dieser Patentschrift enthalten sind.**

(73) Patentinhaber: **BASF Aktiengesellschaft,
Carl-Bosch-Strasse 38, D-6700 Ludwigshafen (DE)**

(72) Erfinder: **Horacek, Heinrich, Dr., Londoner Ring 11,
D-6700 Ludwigshafen (DE)**
Erfinder: **Schoen, Ernst, Dr., Burgunder Strasse 40,
D-6730 Neustadt 14 (DE)**
Erfinder: **Reich, Erhardt, Dr., Heinrichstrasse 2,
D-2845 Damme (DE)**
Erfinder: **Volkert, Otto, Dr., Im Eiertal 10,
D-6719 Weisenheim (DE)**

### Verfahren zur Herstellung von lichtbeständigen Polyurethan-Integralschaumstoffen

Die Erfindung betrifft ein Verfahren zur Herstellung von lichtstabilen Polyurethan-Integralschaumstoffen, insbesondere Weichintegralschaumstoffen durch Umsetzung eines gegebenenfalls urethan- und/oder biuretgruppenhaltigen, aliphatischen und/oder cycloaliphatischen Polyisocyanats mit einem Polyol in Gegenwart von Treibmitteln, einer synergistisch wirkenden Katalysatorkombination, bestehend aus Alkalihydroxiden, -alkoholaten, phenolaten, Alkalisalzen schwacher Säuren und/oder Hexahydrotriazin-derivaten und einer organischen Zinn-, Zink- und/oder Eisen(II)verbindung, sowie gegebenenfalls Hilfs- und Zusatzstoffen.

Polyurethanschaumstoffe sind seit langem bekannt. Eine Übersicht über die Herstellung und Eigenschaften von Polyurethanschaumstoffen wird beispielsweise im Kunststoff-Handbuch, Band VII, «Polyurethane» von R. Vieweg und A. Höchtlen, Verlag Carl Hanser, München 1966, oder der Monographie von J. H. Saunders und K. C. Frisch «High Polymers», Band XVI, Polyurethanes Teil 1 und 2, Verlag Interscience Publishers 1962 und 1964 gegeben.

Aus aromatischen Polyisocyanaten und Polyolen hergestellte Polyurethanschaumstoffe sind üblicherweise nicht lichtbeständig, d. h. sie vergilben durch Lichteinwirkung. Die Ursache für die Vergilbung ist in der Bildung von chinoiden Strukturen aus aromatischen Polymereinheiten zu suchen. Es wurde daher vorgeschlagen, die Lichtempfindlichkeit der Polyurethanschaumstoffe durch Zusatz von Stabilisatoren, in der Regel reduzierend wirkende Verbindungen, zu vermindern. Die Stabilisatoren vermögen die Vergilbung zwar zu verzögern, nicht jedoch vollständig zu unterdrükken. Da für viele Anwendungen eine Vergilbung oder Farbänderung der Polyurethan-Schaumstoffe unerwünscht ist, müssen Weichintegralschaumstoffe, die beispielsweise in der Automobilindustrie als Polster, Sitze, Nackenstützen, Armaturenbrett und Stossstangen eingesetzt werden, entweder mit Folien kaschiert oder lackiert werden. Das gleiche gilt für Duromerschäume, die als Sportartikel, Fensterrahmen und Holzersatz Anwendung finden.

Die Schwierigkeiten werden bei Polyurethan-Elastomeren und -Coatings durch die Verwendung von aliphatischen und/oder cycloaliphatischen an Stelle von aromatischen Polyisocyanaten bei der Polyurethanherstellung umgangen. Diese Methode führte jedoch bei der Herstellung von Polyurethanschaumstoffen bisher zu keinem Erfolg, da die Reaktivität von aliphatischen Polyisocyanaten wesentlich kleiner ist als die der aromatischen.

Nach Angaben der deutschen Offenlegungsschriften 2447067 und 2710901 werden Polyurethanschaumstoffe bzw. Integralschaumstoffe unter Verwendung von Polyisocyanaten, deren NCO-Gruppen nicht direkt mit einem aromatischen Rest verbunden sind und Katalysatorkombinationen auf Basis von Aminen mit =N-$\overset{\cdot}{C}$ =N-Struktur und Erdalkalisalzen von Carbonsäuren mit Dissoziationskonstanten $Ka <10^{-1}$, Alkoholaten und Phenolaten bzw. organischen Bleiverbindungen und Verbindungen mit primären oder sekundären Aminogruppen hergestellt.

Nachteilig an den beschriebenen Verfahren ist, dass die so hergestellten Polyurethanschaumstoffe eine niedere Wärmeformbeständigkeit besitzen und teilweise unzureichende mechanische Eigenschaften aufweisen.

Aufgabe der vorliegenden Erfindung war es lichtechte Polyurethan-Integralschaumstoffe, insbesondere Weich-Integralschaumstoffe herzustellen. Hierbei sollten die Reaktionsbedingungen und mechanischen Eigenschaften der erhaltenen Polyurethan-Integralschaumstoffe solchen auf Basis aromatischen Polyisocyanaten entsprechen.

Diese Aufgabe wurde gelöst durch ein Verfahren zur Herstellung von lichtbeständigen Polyurehtan-Integralschaumstoffen durch Umsetzung einer Mischung aus organischen Polyisocyanaten, Polyolen, Katalysatoren, Treibmitteln und gegebenenfalls Hilfs- und Zusatzstoffen, das dadurch gekennzeichnet ist, dass man als organische Polyisocyanate gegebenenfalls urethan- und/oder biuretgruppenhaltige aliphatische und/oder cycloaliphatische Polyisocyanate und als Katalysatoren synergistisch wirkende Katalysatorkombinationen, bestehend aus

A) mindestens einer Verbindung aus der Gruppe der Alkalihydroxide, -alkoholate, - phenolate, Alkalisalze schwacher Säuren und/oder Hexahydrotriazin-derivate und

B) mindestens eine Verbindung aus der Gruppe der organischen Zinn-, Zink- und/oder Eisen-(II)verbindungen verwendet.

Überraschenderweise zeigt sich, dass durch die erfindungsgemässe spezielle Auswahl eines stark basischen Polyisocyanuratkatalysators und eines metallorganischen Polyurethankatalysators aus der Vielzahl bekannter und handelsüblicher Polyisocyanurat- und Polyurethan-Katalysatoren eine synergistisch wirkende Katalysatorkombination erhalten wird, die die Reaktion zwischen Polyolen und aliphatischen oder cycloaliphatischen Polyisocyanaten genügend stark zu katalysieren vermag. Vorteilhaft ist insbesonders, dass die vorzugsweise verwendeten Urethan- und/oder Biuretgruppen haltigen Polyisocyanate nicht toxisch sind und das Mischungsverhältnis von Polyol- und Polyisocyanat-Verbindungen in einem grossen Bereich variiert werden kann, ohne dass die erhaltenen Polyurehtan-Integralschaumstoffe kollabieren.

Zur Herstellung der lichtbeständigen Hart- und Weich-Polyurethan-Integralschaumstoffe, nach dem erfindungsgemässen Verfahren eignen sich beispielsweise die folgenden Ausgangskomponenten:

Erfindungsgemäss anwendbare organische Polyisocyanate besitzen die Formel $R(NOC)_n$, wo-

rin R mehrwertige, gegebenenfalls urethan- und/oder biuretgruppenhaltige aliphatische oder cycloaliphatische Reste oder gemischte Reste dieser Art und n eine ganze Zahl bedeuten, deren Wert der Valenzzahl von R entspricht und wenigstens 2, vorzugsweise 2 bis 3, beträgt. Im einzelnen seien beispielhaft genannt: aliphatische Diisocyanate, wie Äthylendiisocyanat, Propylen-1,2-diisocyanat, Butylen-1,4-diisocyanat, 2,2,4-Trimethylhexamethylen-1,6-diisocyanat und vorzugsweise Hexamethylen-1,6-diisocyanat, cycloaliphatische Diisocyanate, wie Cyclohexan-1,2-diisocyanat, Cyclohexan-1,3-diisocyanat, Cyclohexan-1,4-diisocyanat, 1-Methyl-2,4-cyclohexan-diisocyanat, 1-Methyl-2,6-cyclohexan-diisocyanat sowie die entsprechenden 1-Methylcyclohexan-diisocyanat-Isomerengemische, 4,4'-,2,4'- und 2,2'-Dicyclohexylmethan-diisocyanat sowie die entsprechenden Isomerengemische und vorzugsweise 3-Isocyanatomethyl-3,5,5-trimethylcyclohexylisocyanat und Polyisocyanate, wie Polycyclohexyl-polymethylen-polyisocyanate mit 2 bis 6, vorzugsweise 3 Cyclohexylenresten im Molekühl.

Vorzugsweise verwendet werden jedoch urethangruppenhaltige und insbesonders biuretgruppenhaltige Polyisocyanate, sowie deren Gemische, hergestellt auf Basis aliphatischer oder cycloaliphatischer Polyisocyanate. Urethangruppenhaltige Polyisocyanate können beispielsweise erhalten werden durch Umsetzung der obengenannten aliphatischen oder cycloaliphatischen Diisocyanate, vorzugsweise durch Umsetzung von Hexamethylen-diisocyanat und Isophorondiisocyanat mit gegebenenfalls substituierten oder modifizierten Alkandiolen mit 2 bis 10, vorzugsweise 2 bis 6 Kohlenstoffatomen im Alkylenrest, wie Äthylenglykol, Butandiol-1,4 Dipropylenglykol, Hexandiol-1,6 und Neopentylglykol, sowie Hydroxypivalinsäureneopentylglykol oder deren Gemische, im Molverhältnis von ungefähr 2:1. Die Herstellung von biuretgruppenhaltigen Polyisocyanaten wird beispielsweise beschrieben in der DE-PS 1101394 und der DE-OS 2261065. Die biuretgruppenhaltigen Polyisocyanate besitzen NCO-Gehalte von 30 bis 15, vorzugsweise von 25 bis 20 Gew.% und Viskositäten bei 20°C von 6000 bis 500, vorzugsweise von 1000 bis 4000 m. Pas.

Als Polyole kommen vorzugsweise Polyesterole und insbesonders Polyätherole in Betracht. Verwendet werden können jedoch auch andere hydroxylgruppenhaltige Polymere mit Molekulargewichten von 500 bis 8000 und Hydroxylzahlen von 20 bis 500, beispielsweise Polycarbonate, insbesonders solche hergestellt durch Umesterung von Diphenylcarbonat mit Hexandiol-1,6 Polyacetale, wie Polyoxymethylene und Polyesteramide.

Geeignete Polyesterole können beispielsweise aus Dicarbonsäuren, vorzugsweise aliphatischen Dicarbonsäuren mit 2 bis 12 Kohlenstoffatomen im Alkylenrest und mehrwertigen Alkoholen, vorzugsweise Diolen, hergestellt werden. Genannt seien beispielhaft aliphatische Dicarbonsäuren, wie Glutarsäure, Pimelinsäure, Korksäure, Azelainsäure, Sebacinsäure, Undecandisäure, Dodecandisäure und vorzugsweise Bernstein- und Adipinsäure und aromatische Dicarbonsäuren, wie Phthalsäure und Terephthalsäure. Beispiele für zwei- und mehrwertige, insbesondere zweiwertige Alkohole sind: Äthylenglykol, Diäthylenglykol, 1,2- bzw. 1,3-Propylenglykol, Dipropylenglykol, Decandiol-1,10, Glycerin, Trimethylolpropan, Pentaerythrit und vorzugsweise Butandiol-1,4, Hexandiol-1,6 und Neopentylglykol. Die Polyesterole besitzen Molekulargewichte von 500 bis 8000, vorzugsweise von 1000 bis 4000 und Hydroxylzahlen von 20 bis 500, vorzugsweise von 50 bis 200. Die Polyesterole können einzeln oder in Form von Mischungen eingesetzt werden.

Als Polyole sind jedoch insbesonders Polyätherole mit Molekulargewichten von 500 bis 8000, vorzugsweise von 1000 bis 4000 und Hydroxylzahlen von 20 bis 500, vorzugsweise von 50 bis 200 geeignet. Die Polyätherole werden nach bekannten Verfahren aus einem oder mehreren Alkylenoxiden mit 2 bis 4 Kohlenstoffatomen im Alkylenrest und einem Startermolekül, das 2 bis 8, vorzugsweise 2 bis 3 aktive Wasserstoffatome gebunden enthält, hergestellt. Geeignete Alkylenoxide sind beispielsweise Tetrahydrofuran, 1,3-Propylenoxid, 1,2- bzw. 1,3-Butylenoxid, Styroloxid und vorzugsweise Äthylenoxid und 1,2-Propylenoxid. Die Alkylenoxide können einzeln, alternierend nacheinander oder als Mischung verwendet werden. Als Startermoleküle kommen beispielsweise in Betracht: Wasser, Dicarbonsäure, wie Bernsteinsäure, Adipinsäure, Phthalsäure und Terephthalsäure, N,N'-dialkylsubstituierte Diamine mit 1 bis 4 Kohlenstoffatomen im Alkylrest, beispielsweise N,N'-Dimethy-äthylendiamin, N,N'-Dimethyl-1,2- bzw. 1,3-propylendiamin, N,N'-Diäthyl-1,4-butylendiamin und N,N'-Dimethyl-1,6-hexamethylen-diamin sowie N-Alkyl-dialkanolamine mit 1 bis 4 Kohlenstoffatomen im Alkylrest, wie N-Methyl-diäthanolamin, N-Äthyl-diäthanolamin und N-Butyl-diäthanolamin und vorzugsweise 2 bis 8 wertige, insbesondere 2 bis 3 wertige Alkohole, wie Äthylenglykol, 1,2- bzw. 1,3-Propylenglykol, Diäthylenglykol, Dipropylenglykol, Butylenglykol-1,4, Hexamethylenglykol-1,6, Glycerin, Trimethylolpropan, Pentaerythrit, Sorbit, Sucrose und Saccharose.

Die Polyätherole können einzeln oder in Form von Mischungen verwendet werden.

Anstelle der Polyesterole oder Polyätherole können auch Mischungen aus Polyester- und Polyätherolen eingesetzt werden, wobei das Verhältnis der Komponenten je nach Verwendungszweck des herzustellenden Polyurethan-Integralschaumstoffs in breiten Grenzen, beispielsweise im Gewichtsverhältnis von Polyesterol zu Polyätherol von 20:80 bis 80:20 variiert werden kann.

Gegebenenfalls kann es zweckmässig sein, neben den genannten Polyolen zusätzlich Kettenverlängerungsmittel oder Vernetzungsmittel zur Herstellung der Polyurethan-Integralschaumstoffe mitzuverwenden. Als derartige Mittel kommen polyfunktionelle, insbesondere di- und trifunktionelle Verbindungen mit Molekulargewichten von 18 bis 600, vorzugsweise 60 bis 300, in Betracht.

Verwendet werden beispielsweise Di- und Trialkanolamine, wie Diäthanolamin und Triäthanolamin und vorzugsweise aliphatische Diole und Triole mit 2 bis 6 Kohlenstoffatomen, wie Äthylenglykol, 1,4-Butylenglykol, 1,6-Hexamethylenglykol, Glyzerin und Trimethylolpropan.

Wesentliches Merkmal des erfindungsgemässen Verfahrens ist die Verwendung einer synergistisch wirkenden Katalysatorkombination, bestehend aus

A)　mindestens einer Verbindung aus der Gruppe der Alkalihydroxide, -alkoholate, -phenolate, Alkalisalze schwacher Säuren und/oder Hexahydrotriazin-derivate und

B)　mindestens einer Verbindung aus der Gruppe der organischen Zink-, Eisen(II)- und vorzugsweise Zinkverbindungen

zur Beschleunigung der Umsetzung zwischen den aliphatischen und/oder cycloaliphatischen Polyisocyanaten und den Polyolen sowie gegebenenfalls Wasser und Kettenverlängerungs- bzw. Vernetzungsmittel. Derartige Katalysatorkombinationen bestehen im wesentlichen aus einem stark basischen Polyisocyanuratkatalysator und einem metallorganischen Polyurethankatalysator. Als stark basische Polyisocyanuratkatalysatoren kommen Alkalihydroxide, insbesonders Natrium- und Kaliumhydroxide, Alkalialkoholate, vorzugsweise Natrium- und insbesonders Kaliumalkoholate von Alkoholen mit vorzugsweise 1 bis 6 Kohlenstoffatomen, wie Methanol, Äthanol, Propanol, Isopropanol, n-Butanol, iso-Butanol und Hexanol, Phenolate, wie Natrium- und Kaliumphenolat, Salze von schwachen organischen und anorganischen Säuren, wie Natrium- und Kaliumformiat, Natrium- und Kaliumacetat, Natrium- und Kaliumoctoat und Natrium- und Kaliumcarbonat und vorzugsweise Hexahydrotriazinderivate in Betracht.

Als Hexahydrotriazin-derivate eignen sich insbesonders　1,3,5-Tris-(N,N-dialkylaminoalkyl)-s-hexahydrotriazine, beispielsweise 1,3,5,-Tris-(N,N-diemthyl-2-aminoäthyl)-s-hexahydrotriazin, 1,3,5-Tris(N,N-dimethyl-3-aminopropyl)-s-hexahydrotriazin, 1,3,5-Tris-(N,N-diäthyl-2-aminoäthyl)-s-hexahydrotriazin, 1,3,5-(N,N-diäthyl-3-aminopropyl)-s-hexahydrotriazin und 1,3,5-Tris-(N,N-dipropyl-2-aminoäthyl)-s-hexahydrotriazin. Für die erfindungsgemässen Zwecke wird jedoch vorzugsweise 1,3,5-Tris-(N,N-dimethyl-3-aminopropyl)-s-hexanhydrotriazin verwendet.

Diese Hexahydrotriazinkomponenten und ihre Herstellung sind bekannt und werden beispielsweise von Nicholas et al, Journal of Cellular Plastics 1 (1) 85, (1965) und von Graymore, Journal of the Chemical Society 1493 (1931) beschrieben.

Die Mengen an einzusetzendem Alkalihydroxid, -alkoholat, -phenolat und Alkalisalz schwacher Säuren und Hexahydrotriazin-derivat betragen von 0,01 bis 5, vorzugsweise von 0,1 bis 3 Gewichtsteilen, bezogen auf 100 Gewichtsteile Polyol.

Als andere Komponente der Katalysatorkombination werden organische Zink-, Eisen(II)- und vorzugsweise Zinkverbindungen verwendet. Im einzelnen seien beispielhaft genannt Eisenacetylacetonat, Zink-2-äthyl-hexoat, Zinknaphthenat, Dibutylzinnversatat und Dibutylzinndiacetat und vorzugsweise Zinndioctoat und insbesondere Dibutylzinndilaurat. die eingesetzten Mengen der organischen Zink-, Eisen(II)- und Zinkverbindungen betragen 0,01 bis 5 Gewichtsteile, vorzugsweise 0,1 bis 3 Gewichtsteile, bezogen auf 100 Gewichtsteile Polyol.

Besonders bewährt hat sich und daher vorzugsweise verwendet wird eine Katalysatorkombination aus Tris-(N,N-dimethylaminopropyl)-s-hexahydrotriazin und Dibutylzinndilaurat.

Als Treibmittel geeignet ist Wasser, das mit den Polyisocyanaten reagiert und Kohlendioxid liefert. Vorzugsweise werden 0,1 bis 2 Gew.%, insbesondere 0,01 bis 1 Gew.% Wasser, bezogen auf das Gewicht des Polyols, verwendet. Anstelle von Wasser können auch physikalisch wirkende Treibmittel oder Mischungen aus Wasser und physikalisch wirkenden Treibmitteln angewandt werden. Physikalisch wirkende Treibmittel sind üblicherweise chemisch inerte, niedrigsiedende, gegebenenfalls halogenierte Kohlenwasserstoffe. In Betracht kommen beispielsweise gegebenenfalls halogenierte Kohlenwasserstoffe mit Siedepunkten unter 50°C, vorzugsweise zwischen −50°C und 30°C bei Atmosphärendruck. Im einzelnen seien beispielhaft genannt halogenierte Kohlenwasserstoffe, wie Monochlordifluormethan, Dichlormonofluormethan, Dichlordifluormethan und Trifluormethan und deren Gemische und Kohlenwasserstoffe, wie Propan und Isobutan, sowie Dimethyläther.

Die erforderliche Menge an physikalisch wirkendem Treibmittel kann in Abhängigkeit von der gewünschten Schaumstoffdichte auf einfache Weise ermittelt werden und beträgt ungefähr 2,5 bis 20 Gew.%, vorzugsweise 5 bis 15 Gew.%, bezogen auf das Polyolgewicht. Geeignete Mischungen aus Wasser und gegebenenfalls halogenierten Kohlenwasserstoffen bestehen im allgemeinen aus 0,01 bis 2 Gew.%, vorzugsweise 0,1 bis 1 Gew.% Wasser und 2,5 bis 20 Gew.%, vorzugsweise 5 bis 10 Gew.% gegebenenfalls halogenierten Kohlenwasserstoffen, wobei die Gew.% bezogen sind auf das Polyolgewicht.

Zur Herstellung der Integralschaumstoffe verwendet man vorzugsweise Trichlorfluormehtan und Methylenchlorid oder Mischungen dieser Treibmittel in einer Menge von 2,5 bis 20 Gewichtsteilen auf 100 Gew.-Teile Polyol. Der Gehalt an Wasser, sofern dieses mitverwendet wird, ist üblicherweise kleiner als 1 Gew.-Teil, vorzugsweise 0.01 bis 0.5 Gew.-Teile, bezogen auf 100 Teile Polyol.

Den schaumfähigen Reaktionsgemischen können ferner gegebenenfalls Hilfs- und Zusatzstoffe, wie sie üblicherweise zur Herstellung von Polyurethan-Schaumstoffen Anwendung finden, einverleibt werden. In Betracht kommen beispielsweise oberflächenaktive Stoffe, Flammschutzmittel, Porenregler, Antioxidationsmittel, Hydrolyseschutzmittel, Farbstoffe, Füllstoffe und andere Zusätze.

Als oberflächenaktive Stoffe kommen beispielsweise Verbindungen in Betracht, die zur Unterstützung der Homogenisierung der Ausgangsstoffe dienen und gegebenenfalls auch geeignet sind, die Zellstruktur der Polyurethan-Schaumstoffe zu regulieren. Genannt seien z. B. Siloxan-Oxyalkylen-Mischpolymerisate und ander Organopolysiloxane, oxäthylierte Alkylphenole, oxäthylierte Fettalkohole, Paraffinöle, Ricinusöl, Ricinolsäureester und Türkischrotöl, die in Mengen von 0,2 bis 6 Gew.-Teilen pro 100 Gew.-Teilen Polyisocyanat angewandt werden.

Zur Verbesserung der Flammbeständigkeit können den erfindungsgemäss hergestellten, lichtbeständigen Polyurethan-Schaumstoffen Flammschutzmittel einverleibt werden. Genannt seien beispielsweise Phosphor- und/oder Halogenatome enthaltende Verbindungen, die zusätzlich die Neigung zur Sprödigkeit in den Schaumstoffen verringern können und als Weichmacher fungieren, wie Trikresylphosphat, Tris-2-chloräthylphosphat, Tris-chlorpropylphosphat und Tris-2,3-dibrompropylphosphat und anorganische Flammschutzmittel, wie Antimontrioxid, Arsenoxid, Ammoniumphosphat u.a. Im allgemeinen hat es sich als vorteilhaft erwiesen, 1 bis 10 Gew.-Teile der genannten Flammschutzmittel für jeweils 100 Gew.-Teile Polyisocyanat zu verwenden.

Nähere Angaben über die obengenannten anderen üblichen Hilfs- und Zusatzstoffe sind der Fachliteratur, beispielsweise der Monographie von J. H. Saunders und K. C. Frisch «High Polymers», Band XVI, Polyurethanes, Teil 1 und 2, Verlag Interscience Publishers 1962 und 1964, zu entnehmen.

Die Herstellung der Polyurethan-Integralschaumstoffe erfolgt nach üblichen, für aromatische Polyisocyanate bekannten Methoden, beispielsweise nach dem Präpolymer-, vorzugsweise nach dem one shot-Verfahren.

Werden die Polyurethan-Integralschaumstoffe nach dem one shot-Verfahren hergestellt, so wird üblicherweise eine Mischung aus Polyo, Katalysator, Treibmittel und gegebenenfalls Kettenverlängerungs- bzw. Vernetzungsmittel, Hilfs- und Zusatzstoffen mit den aliphatischen und/oder cycloaliphatischen Polyisocyanaten bei Temperaturen von 15 bis 60°C, vorzugsweise von 20 bis 50°C in solchen Mengen zur Umsetzung gebracht, dass das Verhältnis von Hydroxylgruppen der Polyole und gegebenenfalls NCO-aktiven Waserstoffatome der Kettenverlängerungs- bzw. Vernetzungsmittel zu NCO-Gruppen der Polyisocyanate 0,8 : 1 bis 1,2 : 1, vorzugsweise ungefähr 1 : 1 beträgt. Bei Verwendung einer Mischkammer mit mehreren Zulaufdüsen können die flüssigen Ausgangsstoffe einzeln oder, sofern die Komponenten fest sind, in Form von Lösungen oder Suspensionen zugeführt und in der Mischkammer intensiv vermicht werden. Als besonders zweckmässig hat es sich jedoch erwiesen, nach dem Zweikomponenten-Verfahren zu arbeiten und als Komponente A eine Mischung aus Polyol, Katalysator, Treibmittel, gegebenenfalls Kettenverlängerungs- bzw. Vernetzungsmittel, Hilfs- und Zusatzstoffen und als Komponente B die aliphatische und/oder cycloaliphatischen Polyisocyanate zu verwenden.

Zur Herstellung der Integralschaumstoffe möchten wir ferner auf die einschlägige Fachliteratur, beispielweise auf A. Nicolay u.a. GAK No. 4 (1977), Vol. 30, 226 – 232, H. Y. Fabris, Adv. in Urethane Technology, Vol. 2 (1973) 203 – 220 verweisen.

Die erfindungsgemäss hergestellten Polyurethan-Integralschaumstoffe besitzen Raumgewichte von ungefähr 60 bis 600 g/l und zeichnen sich besonders durch ihre Lichtbeständigkeit aus.

Die flexiblen Produkte eignen sich besonders zur Herstellung von Automobilteilen, wie Nackenstützen, Armlehnen, Crashpads, Stossstangen, Schuhsohlen und Sportmatten.

Die harten Produkte finden Verwendung als Sportartikel, Fensterrahmen und Holzersatz.

Die in den Beispielen genannten Teile beziehen sich auf das Gewicht.

Verzeichnis der Abkürzungen in der Tabelle der Beispiele:

| A-Komponente: | | Molekulargewicht | Funktionalität | OHZ | Starter | Äthylenoxid | Propylenoxid |
|---|---|---|---|---|---|---|---|
| Polyole: | A | 6 500 | 3 | 26 | TMP | + | + |
| | B | 4 000 | 2 | 28 | EG | + | + |
| | C | 4 900 | 3 | 35 | GLY | + | + |
| | D | 465 | 4 | 480 | EDA | – | + |
| | E | 2 000 | 2 | 58 | GLY | + | + |
| | F | 3 100 | 3 | 550 | GLY | – | + |
| | G | 2 000 | 2 | 56 | PG | – | + |
| | H | 2 000 | 2 | 56 | | | |
| Polyesterole | I | 2 000 | 2 | 56 | | | |

Kettenverlängerer:
B 1,4      Butandiol 1,4
EG      Äthylenglykol
PG      Propylenglykol

Vernetzer:
GLY      Glycerin

TMP      Trimethylolpropan

®Ortegol 615      (Goldschmidt AG)

EDA      Äthylendiamin

Lu 3420      Addukt aus Äthylendiamin Propylenoxid OHZ 480

Katalysatoren:

1. Polyuretahn-Katalysatoren:

DBTDL    Dibutylzinndilaurat
Sn Oct    Zinndioktoat
Zn Oct    Zinkdioktoat
Fe    acetylacetonat
DBTDA    Dibutylzinndiacetat
DBTV    Dibutylzinnversatat

2. Polyisocyanurat-Katalysatoren:

KOH    = Kalilauge 33 Gew.-%ig in EG
K But    = Kalium-tert. butylat
     33 Gew.-%ig EG
K Phen    = Kaliumphenolat
     33 Gew.-%ig EG
K Oct    = Kaliumoctoat 50 Gew.-%ig
     in Polyproylenglykol
K Ac    = Kaliumacetat Gew.-%ig
     in EG
KF    = Kaliumformiat 33 Gew.-%ig
     in EG
HHT    = (Tris(N,N-dimethylamino-
     propyl)-s-hexahydrotriazin

Schaumstabilisatoren:

®Tegostab B 3471 (Goldschmidt)
Tegostab B 4113 (Goldschmidt)
Tegostab B 2888 (Goldschmidt)

Emulgatoren:

SM    (Bayer)
OS 710    (Bayer)
TIAO    Tridecylammoniumoleat

Treibmittel:

F 11    Monofluortrichlormethan

F 12    Difluordichlormethan
F 113    Trifluortrichlormethan

B-Komponente:

Isocyanat:

HMDI    Hexamethylendiisocyanat
TMHMDI    Trimethylhexamethylendiisocyanat
$H_{12}$MDI    Dicyclohexylmethylendiisocyanat
IPDI    Isophorondiisocyanat
XDI    Xylylendiisocyanat

Isocyanatpräpolymere:

HMDI    biuretisiertes
biuret    Hexamethylendiisocyanat
HMDI HPN Umsetzungsprodukt aus 1 Mol
     Hydroxypivalinsäureneopentylgly-
     kol und 2 Mol HMDI
HMDI DPG Umsetzungsprodukt aus 1 Mol
     Dipropylenglykol und 2 Mol HMDI

Erläuterung zur Tabelle mit den Beispielen:

Die Eintragungen der ersten Spalte gelten für alle folgenden, sofern keine neue Eintragung erfolgt. Die Prüfwerte der Formschäume sind nach folgenden DIN bzw. ASTM-Normen vorgenommen worden:

Reissfestigkeit, Dehnung    (DIN 53571)
Weiterreissversuch    (DIN 53515)
Härte Shore A    (DIN 53505)
E-Modul (Biegeversuch)
Biegefestigkeit    (DIN 53423)
Druckspannung 10%    (DIN 53421)
Härte Shore D    (DIN 53505)
▲Y/Yellownessindexdifferenz    (ASTM D 1925)

Polyurethan-Integralweichschaum

| Beispiel Nr. | | 1 | | 2 | | 3 | | 4 | |
|---|---|---|---|---|---|---|---|---|---|
| Einsatzstoffe | | Tle. | | Tle. | | Tle. | | Tle. | |
| Polyole | | A | 21 | id. | | id. | | id. | |
| | | B | 68 | id. | | id. | | id. | |
| Kettenverlängerer | | B 1,4 | 8 | id. | | id. | | id. | |
| Vernetzer | | EG | 0,5 | id. | | id. | | id. | |
| A Katalysatoren | | DBTDL | 3 | id. | | Sn Oct. | 3 | DBTDL | 3 |
| | | KOH | 0,75 | HHT | 3 | KOH | 0,75 | KOH | 0,75 |
| Schaumstabilisatoren | | | | | | | | SM | 1 |
| Treibmittel | | F 11 | 6 | id. | | id. | | F 11 | 15 |
| | | Wasser | 0,5 | id. | | id. | | — | |
| B Isocyanate | | HMDI | | HMDI | | HMDI | | HMDI | |
| | | biuret | 50 | biuret | 100 | biuret | 50 | biuret | 50 |
| | | HMDI-DPG | 50 | — | | HMDI DPG | 50 | HMDI HPN | 50 |
| MV⁺ B/100 A | | 70 | | 51 | | 80 | | 80 | |
| Raumgewicht frei · kg/m³ | | 180 | | 180 | | 180 | | 100 | |
| Topfzeit sec. | | 30 | | 50 | | 70 | | 25 | |
| Steigzeit sec. | | 60 | | 75 | | 120 | | 50 | |
| Raumgewicht Form kg/m³ | | 400 | | 600 | | 400 | | 350 | |
| Reissfestigkeit N/mm² | | 0,8 | | 1,4 | | 0,8 | | 1,0 | |
| Dehnung % | | 120 | | 100 | | 110 | | 120 | |
| Weiterreissfestigkeit N/mm | | 2,0 | | 2,5 | | 3,0 | | 2,0 | |
| Härte Shore A | | 45 | | 50 | | 40 | | 40 | |
| ▲ Y (Xenontest 500 h) | | 0,5 | | 1 | | 3 | | 5 | |

+ Mengenverhältnis

Polyurethan-Integralweichschaum

| Beispiel Nr. | | 5 | | 6 | | 7 | | 8 | |
|---|---|---|---|---|---|---|---|---|---|
| Einsatzstoffe | | Tle. | | Tle. | | Tle. | | Tle. | |
| | Polyole | C | 41 | id. | | id. | | id. | |
| | | B | 25 | id. | | id. | | id. | |
| | Kettenverlängerer | B 1,4 | 11 | id. | | id. | | id. | |
| A | Vernetzer | Lu 3420 | 1 | id. | | id. | | id. | |
| | Katalysatoren | HHT | 3 | id. | | KOH | 0,75 | KOH | 1,5 |
| | | DBTDL | 3 | id. | | Zn Oct. | 3 | DBTDL | 1,5 |
| | Schaumstabilisatoren | | | Tegostab B 3471 | 0,3 | Tegostab B 3471 | 0,3 | — | |
| | | SM | 0,5 | id. | | id. | | SM | 0,25 |
| | Treibmittel | F 11 | 20 | — | | F 11 | 20 | F 11 | 15 |
| | | Wasser | | | 0,8 | — | | — | |
| B | Isocyanate | HMDI biuret | 50 | id. | | id. | | id. | |
| | | HMDI-DPG | 50 | id. | | id. | | id. | |
| | MV B/100 A | 80 | | 80 | | 70 | | 70 | |
| | Raumgewicht $_{frei}$ · kg/m³ | 90 | | 140 | | 90 | | 90 | |
| | Topfzeit sec. | 35 | | 35 | | 23 | | 33 | |
| | Steigzeit sec. | 60 | | 75 | | 45 | | 70 | |
| | Raumgewicht $_{Form}$ kg/m³ | 350 | | 300 | | 400 | | 250 | |
| | Reissfestigkeit N/mm² | 1,1 | | 1,0 | | 1,1 | | 0,7 | |
| | Dehnung % | 130 | | 130 | | 100 | | 140 | |
| | Weiterreissfestigkeit N/mm | 3,0 | | 2,0 | | 4 | | 2 | |
| | Härte Shore A | 35 | | 50 | | 60 | | 24 | |
| | ▲ Y (Xenontest 500 h) | 2 | | 0 | | 5 | | 3 | |

Polyurethan-Integralweichschaum

| Beispiel Nr. | | 9 | | 10 | | 11 | | 12 | |
|---|---|---|---|---|---|---|---|---|---|
| Einsatzstoffe | | Tle. | | Tle. | | Tle. | | Tle. | |
| | Polyole | C | 41 | id. | | id. | | id. | |
| | | B | 25 | id. | | id. | | id. | |
| | Kettenverlängerer | B 1,4 | 11 | id. | | id. | | id. | |
| A | Vernetzer | | | | | | | | |
| | Katalysatoren | HHT | 3 | id. | | id. | | id. | |
| | | DBTDL | 3 | id. | | id. | | id. | |
| | Schaumstabilisatoren | Tegostab B 3471 | 0,3 | id. | | id. | | id. | |
| | | SM | 0,5 | id. | | id. | | id. | |
| | Treibmittel | F 11 | 20 | id. | | id. | | id. | |
| B | Isocyanate | HMDI | 100 | TMHMDI | 100 | H$_{12}$HMDI | 100 | IPDI | 100 |
| | MV B/100 A | 27 | | 35 | | 45 | | 35 | |
| | Raumgewicht $_{frei}$ · kg/m³ | 50 | | 50 | | 60 | | 70 | |
| | Topfzeit sec. | 15 | | 25 | | 35 | | 90 | |
| | Steigzeit sec. | 20 | | 35 | | 80 | | 200 | |
| | Raumgewicht $_{Form}$ kg/m³ | 200 | | 200 | | 250 | | 300 | |
| | Reissfestigkeit N/mm² | 1,0 | | 1,1 | | 0,8 | | 0,9 | |
| | Dehnung % | 50 | | 50 | | 70 | | 100 | |
| | Weiterreissfestigkeit N/mm | 2 | | 2,2 | | 1,5 | | 2,0 | |
| | Härte Shore A | 30 | | 35 | | 25 | | 35 | |
| | ▲ Y (Xenontest 500 h) | 2 | | −1 | | 2 | | 5 | |

Polyurethan-Integralweichschaum

| Beispiel Nr. | | 13 | | 14 | | 15 | | 16 | |
|---|---|---|---|---|---|---|---|---|---|
| Einsatzstoffe | | Tle. | | Tle. | | Tle. | | Tle. | |
| Polyole | A | 21 | | id. | | id. | | id. | |
| | B | 68 | | id. | | id. | | id. | |
| Kettenverlängerer | B 1,4 | 8 | | id. | | id. | | id. | |
| A Vernetzer | EG | 0,5 | | id. | | id. | | id. | |
| Katalysatoren | DBTDL | 3,0 | | id. | | id. | | Sn Oct. | 3,0 |
| | KBut | 0,75 | | K Phenolat | 1,5 | K Octoat | 3,0 | K Acetat | 3,0 |
| Schaumstabilisatoren | Tegostab | | | | | | | | |
| | B 3471 | 0,3 | | id. | | id. | | id. | |
| | SM | 0,5 | | id. | | id. | | id. | |
| Treibmittel | F 11 | 6 | | id. | | id. | | id. | |
| | | | | | | F 113 | 6,0 | F 113 | 6,0 |
| B Isocyanate | HMDI | | | | | | | | |
| | biuret | 50 | | id. | | id. | | id. | |
| | HMDI DPG | 50 | | id. | | id. | | id. | |
| MV B/100 A | | 70 | | 70 | | 70 | | 70 | |
| Raumgewicht frei · kg/m³ | | 150 | | 200 | | 150 | | 150 | |
| Topfzeit sec. | | 35 | | 40 | | 35 | | 55 | |
| Steigzeit sec. | | 75 | | 100 | | 70 | | 150 | |
| Raumgewicht Form kg/m³ | | 600 | | 600 | | 350 | | 400 | |
| Reissfestigkeit N/mm² | | 2,0 | | 2,0 | | 1,5 | | 1,3 | |
| Dehnung % | | 120 | | 150 | | 170 | | 160 | |
| Weiterreissfestigkeit N/mm | | 3,5 | | 2,5 | | 2 | | 2 | |
| Härte Shore A | | 50 | | 40 | | 35 | | 40 | |
| ▲ Y (Xenontest 500 h) | | 0,7 | | 6 | | 3 | | 5 | |

Polyurethan-Integralweichschaum

| Beispiel Nr. | | 17 | | 18 | | 19 | | 20 | |
|---|---|---|---|---|---|---|---|---|---|
| Einsatzstoffe | | Tle. | | Tle. | | Tle. | | Tle. | |
| Polyole | C | 80 | | id. | | id. | | id. | |
| | G | 10 | | id. | | id. | | id. | |
| Kettenverlängerer | B 1,4 | 10 | | id. | | id. | | id. | |
| A Vernetzer | Ortegol 615 | 4,5 | | id. | | id. | | id. | |
| Katalysatoren | HHT | 3 | | KOH | 0,75 | KF | 0,75 | id. | |
| | DBTDL | 3 | | DBTDL | 3 | DBTDL | 3 | id. | |
| Schaumstabilisatoren | Tegostab | | | | | | | | |
| | B 9113 | 0,5 | | id. | | id. | | id. | |
| Treibmittel | F 11 | 5 | | id. | | id. | | id. | |
| | Wasser | 0,5 | | id. | | id. | | id. | |
| B Isocyanate | HMDI biuret | 100 | | HMDI biuret | 50 | HMDI | 100 | HMDI biuret | 50 |
| | | | | HMDI DPG | 50 | — | | HMDI-HPN | 50 |
| MV B/100 A | | 60 | | 65 | | 26 | | 65 | |
| Raumgewicht frei · kg/m³ | | 180 | | 100 | | 90 | | 110 | |
| Topfzeit sec. | | 42 | | 25 | | 12 | | 30 | |
| Steigzeit sec. | | 70 | | 50 | | 35 | | 80 | |
| Raumgewicht Form kg/m³ | | 250 | | 300 | | 150 | | 250 | |
| Reissfestigkeit N/mm² | | 1,0 | | 1,2 | | 0,5 | | 1,5 | |
| Dehnung % | | 110 | | 150 | | 120 | | 130 | |
| Weiterreissfestigkeit N/mm | | 2,5 | | 2,0 | | 1,0 | | 2,0 | |
| Härte Shore A | | 45 | | 35 | | 40 | | 30 | |
| ▲ Y (Xenontest 500 h) | | 0,5 | | 3 | | 3 | | 5 | |

Polyurethan-Integralweichschaum

| Beispiel Nr. | | 21 | | 22 | | 23 | | 24 | |
|---|---|---|---|---|---|---|---|---|---|
| Einsatzstoffe | | Tle. | | Tle. | | Tle. | | Tle. | |
| | Polyole | I | 75 | id. | | id. | | id. | |
| | Kettenverlängerer | EG | 10 | id. | | id. | | id. | |
| A | Vernetzer | | | | | | | | |
| | Katalysatoren | HHT | 3 | HHT | 3 | KOH | 0,75 | Kbut | 1,0 |
| | | DBTDL | 3 | Sn Oct | 3 | DBTDL | 3 | DBTDL | 3,0 |
| | Schaumstabilisatoren | Tegostab | | | | | | | |
| | | B 2888 | 0,3 | id. | | id. | | id. | |
| | | SM | 0,3 | id. | | id. | | id. | |
| | Treibmittel | F 11 | 13 | id. | | id. | | id. | |
| B | Isocyanate | HMDI | | | | | | | |
| | | biuret | 50 | id. | | id. | | id. | |
| | | HMDI-DPG | 50 | id. | | id. | | id. | |
| | MV B/100 A | 100 | | 100 | | 100 | | 100 | |
| | Raumgewicht frei · kg/m³ | 150 | | 150 | | 150 | | 160 | |
| | Topfzeit sec. | 25 | | 28 | | 20 | | 15 | |
| | Steigzeit sec. | 60 | | 75 | | 50 | | 30 | |
| | Raumgewicht Form kg/m³ | 450 | | 350 | | 450 | | 600 | |
| | Reissfestigkeit N/mm³ | 1,0 | | 0,8 | | 1,1 | | 2 | |
| | Dehnung % | 120 | | 150 | | 140 | | 130 | |
| | Weiterreissfestigkeit N/mm | 8,0 | | 7,0 | | 8,0 | | 9 | |
| | Härte Shore A | 60 | | 55 | | 70 | | 80 | |
| | ▲ Y (Xenontest 500 h) | 1 | | 2 | | 1,5 | | 3 | |

Polyurethan-Integralweichschaum

| Beispiel Nr. | | 25 | | 26 | | 27 | | 28 | |
|---|---|---|---|---|---|---|---|---|---|
| Einsatzstoffe | | Tle. | | Tle. | | Tle. | | Tle. | |
| | Polyole | H | 86 | id. | | id. | | id. | |
| | Kettenverlängerer | B 1,4 | 11 | id. | | id. | | id. | |
| A | Vernetzer | Gly | 0,5 | id. | | id. | | id. | |
| | Katalysatoren | HHT | 3 | id. | | id. | | id. | |
| | | DBTDL | 3 | id. | | id. | | id. | |
| | Schaumstabilisatoren | Tegostab | | | | | | | |
| | | B 2888 | 0,2 | id. | | id. | | id. | |
| | | | | | | SM | 1 | — | |
| | Treibmittel | F 11 | 10 | id. | | id. | | id. | |
| | | Wasser | 0,5 | id. | | — | | — | |
| B | Isocyanate | HMDI | | 100 | | | | | |
| | | biuret | 50 | HMDI DPG | | HMDI biuret | 50 | HMDI biuret | 100 |
| | | HMDI-DPG | 50 | | | HMDI-HPN | 50 | — | |
| | MV B/100 A | 80 | | 90 | | 90 | | 85 | |
| | Raumgewicht frei ·kg/m³ | 150 | | 150 | | 160 | | 160 | |
| | Topfzeit sec. | 40 | | 40 | | 38 | | 35 | |
| | Steigzeit sec. | 75 | | 75 | | 70 | | 60 | |
| | Raumgewicht Form kg/m³ | 300 | | 350 | | 450 | | 400 | |
| | Reissfestigkeit N/mm² | 0,8 | | 0,9 | | 1,5 | | 1,5 | |
| | Dehnung % | 150 | | 140 | | 150 | | 120 | |
| | Weiterreissfestigkeit N/mm | 2,5 | | 3,0 | | 3,5 | | 3 | |
| | Härte Shore A | 30 | | 45 | | 45 | | 50 | |
| | ▲ Y (Xenontest 500 h) | 0,7 | | 1 | | 2,5 | | 0 | |

Polyurethan-Integralweichschaum

| Beispiel Nr. | | 29 | | 30 | | 31 | | 32 | |
|---|---|---|---|---|---|---|---|---|---|
| Einsatzstoffe | | Tle. | | Tle. | | Tle. | | Tle. | |
| | Polyole | D | 30 | id. | | id. | | id. | |
| | | E | 48 | id. | | id. | | id. | |
| | Kettenverlängerer | EG | 4,5 | id. | | id. | | id. | |
| A | Vernetzer | TMP | 12 | id. | | id. | | id. | |
| | Katalysatoren | HHT | 1,5 | HHT | 3 | KOH | 0,75 | Kbut | 1,0 |
| | | DBTDL | 1,5 | DBTDL | 3 | DBTDL | 1,5 | DBTDL | 1,5 |
| | Emulgatoren | OS 710 | 0,8 | id. | | id. | | id. | |
| | | TDAO | 3 | id. | | id. | | id. | |
| | Treibmittel | F 11 | 10 | id. | | id. | | id. | |
| | | | | | | F 12 | 3,0 | — | |
| B | Isocyanate | HMDI biuret | 100 | HMDI biuret | 50 | HMDI | 100 | H$_{11}$MDI | 100 |
| | | | | HMDI-DPG | 50 | — | | — | |
| | MV B/100 A | | 170 | | 180 | | 75 | | 105 |
| | Raumgewicht $_{frei}$ · kg/m³ | | 260 | | 250 | | 180 | | 200 |
| | Topfzeit sec. | | 80 | | 42 | | 12 | | 65 |
| | Steigzeit sec. | | 120 | | 80 | | 50 | | 140 |
| | Raumgewicht $_{Form}$ kg/m³ | | 600 | | 500 | | 700 | | 600 |
| | E-Modul (Biegevers.) N/mm² | | 1400 | | 1200 | | 1400 | | 1300 |
| | Biegefestigkeit N/mm² | | 35 | | 30 | | 25 | | 30 |
| | Druckspannung | | | | | | | | |
| | 10% Stauchung N/mm² | | 5 | | 4 | | 5 | | 3 |
| | Härte Shore D | | 70 | | 60 | | 65 | | 55 |
| | ▲ Y (Xenontest 500 h) | | 0,5 | | 1 | | 0,5 | | 3 |

Polyurethan-Integralweichschaum

| Beispiel Nr. | | 33 | | 34 | | 35 | | 36 | |
|---|---|---|---|---|---|---|---|---|---|
| Einsatzstoffe | | Tle. | | Tle. | | Tle. | | Tle. | |
| | Polyole | F | 53 | id. | | id. | | id. | |
| | | C | 10 | id. | | id. | | id. | |
| | Kettenverlängerer | | | | | | | | |
| A | Vernetzer | TMP | 18 | id. | | id. | | id. | |
| | Katalysatoren | HHT | 1,5 | KOH | 0,75 | KF | 1,0 | HHT | 3 |
| | | DBTDL | 1,5 | DBTDL | 3 | DBTDL | 3 | DBTDL | 3 |
| | Emulgatoren | OS 710 | 2 | id. | | id. | | id. | |
| | | SM | 0,6 | id. | | id. | | id. | |
| | Treibmittel | F 11 | 10 | id. | | id. | | id. | |
| B | Isocyanate | HMDI biuret | 50 | HMDI biuret | 50 | — | | HMDI biuret | 50 |
| | | HMDI-HPN | 50 | HMDI-HPN | 50 | HMDI-HPN | 100 | HMDI | 50 |
| | MV B/100 A | | 220 | | 100 | | 110 | | 80 |
| | Raumgewicht $_{frei}$ · kg/m³ | | 125 | | 200 | | 200 | | 200 |
| | Topfzeit sec. | | 80 | | 20 | | 25 | | 25 |
| | Steigzeit sec. | | 135 | | 60 | | 75 | | 65 |
| | Raumgewicht $_{Form}$ kg/m³ | | 700 | | 600 | | 750 | | 600 |
| | E-Modul (Biegevers.) N/mm² | | 1200 | | 1400 | | 1200 | | 1300 |
| | Biegefestigkeit N/mm² | | 25 | | 30 | | 35 | | 40 |
| | Druckspannung | | | | | | | | |
| | 10% Stauchung N/mm² | | 4 | | 3 | | 5 | | 6 |
| | Härte Shore D | | 65 | | 60 | | 55 | | 70 |
| | ▲ Y (Xenontest 500 h) | | 3 | | 2 | | 0,5 | | 5 |

Polyurethan-Integralweichschaum

| Beispiel Nr. | | 37 | 38 | 39 | 40 |
|---|---|---|---|---|---|
| Einsatzstoffe | | Tle. | Tle. | Tle. | Tle. |
| A | Polyole A | 21 | id. | id. | id. |
| | Polyole B | 68 | id. | id. | id. |
| | Kettenverlängerer B 1,4 | 8 | id. | id. | id. |
| | Vernetzer EG | 0,5 | id. | id. | id. |
| | Katalysatoren Fe acetylacetonat | 1 | Zn Oct. 3 | DBTDL 3 | DBTV 3 |
| | KOH | 0,75 | KOH 0,75 | KOH 0,75 | KOH 0,75 |
| | Schaumstabilisatoren SM | 0,25 | id. | id. | id. |
| | Treibmittel F 11 | 15 | id. | id. | id. |
| B | Isocyanate | HMDI biuret 100 | id. | id. | XDI 100 |
| | MV B/100 A | 80 | 80 | 80 | 80 |
| | Raumgewicht $_{frei}$ · kg/m³ | 150 | 120 | 180 | 160 |
| | Topfzeit sec. | 30 | 35 | 25 | 30 |
| | Steigzeit sec. | 55 | 60 | 45 | 75 |
| | Raumgewicht $_{Form}$ kg/m³ | 350 | 400 | 450 | 500 |
| | Reissfestigkeit N/mm² | 1,5 | 1,0 | 1,2 | 1,1 |
| | Dehnung % | 150 | 120 | 130 | 110 |
| | Weiterreissfestigkeit N/mm | 2,0 | 2,1 | 2,5 | 2,5 |
| | Härte Shore A | 30 | 40 | 35 | 45 |
| | ▲ Y (Xenontest 500 h) | 0,5 | 1 | 2 | 3 |

## Patentansprüche

1. Verfahren zur Herstellung von lichtbeständigen Polyurehtan-Integralschaumstoffen durch Umsetzung einer Mischung aus organischen Polyisocyanaten, Polyolen, Katalysatoren, Treibmitteln und gegebenenfalls Hilfs- und Zusatzstoffe, dadurch gekennzeichnet, dass man als organische Polyisocyanate gegebenenfalls modifizierte aliphatische und/oder cycloaliphatische Polyisocyanate und als Katalysatoren synergistische Katalysatorkombinationen, bestehend aus

A) mindestens einer Verbindung aus der Gruppe der Alkalihydroxide, -alkoholate, -phenolate, Alkalisalze schwacher Säuren und/oder Hexahydrotriazin-s-derivate und

B) mindestens einer Verbindung aus der Gruppe der organischen Zinn-, Zink- und/oder Eisen(II)verbindungen, verwendet.

2. Verfahren gemäss Anspruch 1, dadurch gekennzeichnet, dass man als organische Polyisocyanate NCO-Gruppen aufweisende urethanmodifizierte aliphatische und/oder cycloaliphatische Polyisocyanate verwendet.

3. Verfahren gemäss Anspruch 2, dadurch gekennzeichnet, dass die urethanmodifizierten Polyisocyanate hergestellt werden durch Umsetzung von aliphatischen und/oder cycloaliphatischen Diisocyanaten und Alkandiolen mit 2 bis 10 Kohlenstoffatomen im Alkylenrest im Molverhältnis von ungefähr 2 : 1.

4. Verfahren gemäss Anspruch 1, dadurch gekennzeichnet, das man als organische Polyisocyanate biuretgruppenhaltige aliphatische und/oder cycloaliphatische Polyisocyanate verwendet.

5. Verfahren gemäss Anspruch 1, dadurch gekennzeichnet, dass die Katalysatorkombination aus

A) 0,01 bis 5 Gew.-teilen eines Alkalihydroxids, -alkoholats, -phenolats, Alkalisalzes einer schwachen Säure und/oder Hexahydrotriazinderivats und

B) 0,01 bis 5 Gew.-teilen einer organischen Zinn-, Zink- und/oder Eisenverbindung, bezogen auf 100 Gew.-teile Polyol.

6. Verfahren gemäss Anspruch 1, dadurch gekennzeichnet, dass die Katalysatorkombination aus Tris-(dimethylaminopropyl)-s-hexahydrotriazin und Dibutylzinndilaurat besteht.

## Revendications

1. Procédé de préparation de Mousses de polyuréthanne intégrales, résistant à la lumière, par réaction d'un mélage de polyisocyanates organiques, de polyols, de catalyseurs, d'agents d'expansion et éventuellement d'additifs et d'adjuvants, caractérisé en ce que l'on emploie comme polyisocyanates organiques des polyisocyanates aliphatiques et(ou) cycloaliphatiques éventuellement modifiés et comme datalyseurs des combinaisons de composés catalytiques à effet synergique de

A) au moins un composé choisi parmi les hydroxydes, alcoolates et phénolates de métaux alcalins, les sels de métaux alcalins d'acides faibles et(ou) les dérivés de l'hexahydro-s-triazine et

B) au moins un composé choisi parmi les dérivés organiques de l'étain, du zinc et(ou) du fer bivalent.

2. Procédé suivant la revendication 1, caractérisé en ce que l'on emploie comme polyisocyanates organiques des polyisocyanates aliphatiques et(ou) cycloaliphatiques à groupes -NCO, modifiés par l'uréthanne.

3. Procédé suivant la revendication 2, caractérisé en ce que les polyisocyanates modifiés par l'uréthanne sont préparés par la réaction de diisocyanates aliphatiques et(ou) cycloaliphatiques et d'alcane-diols à groupe alcoylène en $C_2$ à $C_{10}$ dans un rapport molaire d'environ 2 : 1

4. Procédé suivant la revendication 1, caractérisé en ce que l'on emploie comme polyisocyanates organiques des polyisocyanantes aliphatiques et(ou) cycloaliphatiques ocomprenant des groupes biuret.

5. Procédé suivant la revendication 1, caractérisé en ce que la combinaison catalytique est formée de

A) 0,01 à 5 parties en poids d'un hydroxyde, alcoolate ou phénolate de métal alcalin, d'un sel de métal alcalin d'un acide faible et(ou) d'un dérivé de l'hexahydro-triazine et

B) 0,01 à 5 parties en poids d'un dérivé organique de l'étain, du zinc et(ou) du fer,

ces proportions se rapportant à 100 parties en poids de polyol.

6. Procédé suivant la revendication 1, caractérisé en ce que la combinaison catalytique est formée de tris-(diméthyl-aminopropyl)-hexahydro-s-triazine et de dilaurate de dibutyl-étain.

## Claims

1. A process for the manufacture of light-stable polyurethane integral skin foams by reacting a mixture of organic polyisocyanates, polyols, catalysts and blowing agents, with or without assistance isocyanates used are unmodified or modified aliphatic and/or cycloaliphatic polyisocyanates, and the catalysts used are synergistic catalyst combinations consisting of

A) one or more compounds from the group comprising the alkali metal hydroxides, alkali metal alcoholates, alkali metal phenolates, alkali metal salts of weak acids and/or s-hexahydrotriazine derivatives and

B) one or more compounds from the group comprising organic tin, zinc and/or iron(II) compounds.

2. A process as claimed in claim 1, wherein the organic polyisocyanate used is a urethane-modified aliphatic and/or cycloaliphatic polyisocyanate containing NCO groups.

3. A process as claimed in claim 2, wherein the urethanemodified polyisocyanate is prepared by reacting an aliphatic and/or cycloaliphatic diisocyanate and an alkanediol of 2 to 10 carbon atoms in the alkylene radical, in a molar ratio of about 2 : 1.

4. A process as claimed in claim 1, wherein the organic polyisocyanate used is an aliphatic and/or cycloaliphatic polyisocyanate containing biuret groups.

5. A process as claimed in claim 1, wherein the catalyst combination consists of

A) from 0,01 to 5 parts by weight of an alkali metal hydroxide, alkali metal alcoholate, alkali metal phenolate, alkali metal salt of a weak acid and/or hexahydrotriazine derivative and

B) from 0,01 to 5 parts by weight of an organic tin compound, zinc compound and/or iron compound, per 100 parts by weight of polyol.

6. A process as claimed in claim 1, wherein the catalyst combination consists of tris-(dimethylaminopropyl)-s-hexahydrotriazine and dibutyl-tin dilaurate.